# EUROPEAN PATENT APPLICATION

(11) **EP 4 513 632 A1**
(43) Date of publication of application: **26.02.2025**
(21) Application number: 23193379.7
(22) Date of filing: 25.08.2023
(51) Int. Cl.: H01M 10/6568, B60L 58/24, H01M 10/613, H01M 10/615, H01M 10/617, H01M 10/625, H01M 10/63, H01M 10/48

(54) **BATTERY SYSTEM**

(71) Applicant: Rimac Technology LLC, 10431 Sveta Nedelja (HR)
(72) Inventor: Miller, Jack William, Witney, Oxfordshire, OX28 3FP (GB); Bradac, Frantisek, 69002 Breclav (CZ)
(74) Representative: Hoffmann Eitle

(57) **Abstract**

There is provided a battery system comprising: a battery comprising at least one set of battery modules, each battery module comprising at least one battery cell, a fluid distribution arrangement for distributing a fluid to the battery, said fluid distribution arrangement comprising at least one first fluid distribution point, at least one second fluid distribution point, and at least one first channel arranged to distribute the fluid between the at least one first fluid distribution point and the at least one second fluid distribution point via the at least one set with the fluid sequentially passing each one of the battery modules in the set, and the battery system comprising further a control unit configured to determine at least one parameter for controlling the fluid distribution arrangement to distribute said fluid to the battery and to control said fluid distribution arrangement based on the determined at least one parameter.

## Description

### Technical field

The present invention relates to the technical field of battery systems. More particularly, the present invention relates to the technical field of thermal management in battery systems.

### Background

Batteries are playing an increasing role in energy storage for both mobility and grid storage applications. The transition towards using renewable fuel types is driving demand for cheaper, longer lasting and more efficient types of batteries and power conversion methods.

A battery normally comprises one or more battery modules, and each battery module normally comprises one or more battery cells packed within the available space in the battery module.

Thermal management of the battery is a crucial aspect in ensuring safe operation and an extended life cycle of the battery. The thermal management includes temperature control of the battery via both heating and cooling.

Battery cells tend to have reduced performance, reduced round trip efficiency, and a higher propensity to non-reversible aging at low temperatures. Heating of the battery may be required in situations in which the temperature of the battery, influenced for example by the temperature of the surrounding environment of the battery, is disadvantageous for operation of the battery. In such situations it may be required that the battery is heated at least to the predetermined temperature above which safe operation of the battery can be guaranteed before the battery is operated.

However, heating of the battery can be energetically inefficient, which in turn reduces the overall energetic efficiency of the system in which the battery is used.

Batteries may also require cooling in order to stay within the operational temperature range during operation. The heat generated by the plurality of battery cells needs to be properly rejected from the corresponding battery module and accordingly the battery, in order that a safe operation of the battery is ensured. However, cooling of the battery also increases the energy consumption in the system leading again to a reduced overall energetic efficiency of the system.

An adequate thermal management of the battery can increase the overall energetic efficiency of the system. One method of thermal management of the battery can be the use of predictive thermal management. The predictive thermal management utilizes software-based prediction of upcoming events for which the required battery temperature window (limits) is also calculated and then the temperature of the battery is progressively controlled by heating up or cooling down the battery such that it always stays within the current and also the future temperature limits.

However, the predictive thermal management still has limitations occasioned, for example, by the accuracy of prediction of future operating conditions which in some scenarios of operation can lead to higher than optimal energy usage of the battery, reducing the overall energetic efficiency of the system in which the battery is used.

The energy efficiency of the thermal management can be further decreased by increasing the granularity of the control of battery temperature.

Hence, it is an object of the present invention to provide for an improved thermal management of a battery and hence for an improved energetic efficiency of the system in which the battery is used.

### Summary

The mentioned problems and drawbacks are addressed by the subject matter of the independent claims. Further preferred embodiments are defined in the dependent claims.

According to an aspect of the present invention there is provided a battery system comprising: a battery comprising at least one set of battery modules, each battery module comprising at least one battery cell, a fluid distribution arrangement for distributing a fluid to the battery, said fluid distribution arrangement comprising at least one first fluid distribution point, at least one second fluid distribution point, and at least one first channel arranged to distribute the fluid between the at least one first fluid distribution point and the at least one second fluid distribution point via the at least one set with the fluid sequentially passing each one of the battery modules in the set, and the battery system comprising further a control unit configured to determine at least one parameter for controlling the fluid distribution arrangement to distribute said fluid to the battery and to control said fluid distribution arrangement based on the determined at least one parameter.

According to a further aspect of the present invention there is provided a method for controlling a battery system, said battery system comprising: a battery comprising at least one set of battery modules, each battery module comprising at least one battery cell, a fluid distribution arrangement for distributing a fluid to the battery, said fluid distribution arrangement comprising at least one first fluid distribution point, at least one second fluid distribution point, and at least one first channel arranged to distribute the fluid between the at least one first fluid distribution point and the at least one second fluid distribution point via the at least one set with the fluid sequentially passing each one of the battery modules in the set, said method comprising determining at least one parameter for controlling the fluid distribution arrangement to distribute said fluid to the battery, and controlling said fluid distribution arrangement based on the determined at least one parameter.

### Brief description of the drawings

Embodiments of the present invention, which are presented for better understanding the inventive concepts, but which are not to be seen as limiting the invention, will now be described with reference to the figures in which:
- Fig. 1: shows a schematic illustration of the exemplary energy consumption distribution in a motor vehicle as an exemplary environment for applying embodiments of the present invention;
- Fig. 2: shows schematically an exemplary environment for applying embodiments of the present invention;
- Fig. 3: shows schematically an embodiment according to the present invention;
- Fig.4: shows schematically an embodiment according to the present invention;
- Fig.5: shows schematically an embodiment according to the present invention;
- Fig.6: shows schematically an embodiment according to the present invention;
- Fig.7: show schematically a general method embodiment according to the present invention;

### Detailed description

Exemplary environment for applying embodiments of the present invention may be a motor vehicle. The motor vehicle may be a motor vehicle that entirely or at least in part uses for propulsion electric power stored in one or more batteries, such as electric vehicle or hybrid vehicle, but may also be a conventional fuel-based motor vehicle using a combustion-based power for propulsion, however using one or more batteries as a motor vehicle starter battery. Each of the one or more batteries comprises one or more battery modules, each battery module comprises at least one battery cell. However, normally, each of the battery modules comprises a plurality of battery cells, densely packed within the available space in the battery module.

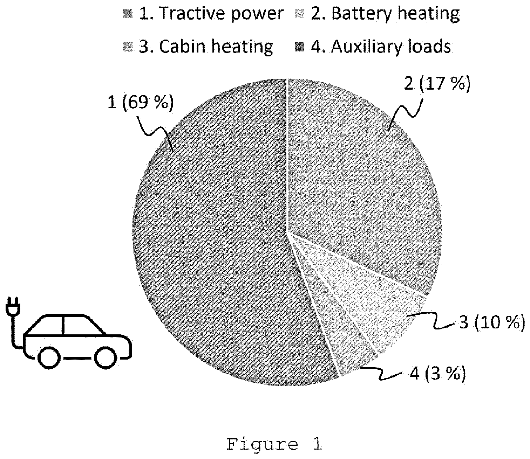

Figure 1 shows a schematic illustration of the exemplary energy consumption distribution in an electric vehicle as an exemplary environment for applying embodiments of the present invention. The electric vehicle comprises one or more batteries.

Figure 1 shows an exemplary energy consumption distribution for the electric vehicle for the case when energy is consumed for heating of the one or more batteries. Heating of the one or more batteries may be required in situations when the temperature of the one or more batteries is lower than a predetermined temperature below which safe operation of the one or more batteries cannot be guaranteed. For example, before a start of the operation of the one or more batteries (here "operation of the one or more batteries" may refer to the one or more batteries providing electrical energy for propulsion or for some auxiliary systems/loads in the electric vehicle), it may be required that the one or more batteries are heated at least up to the predetermined temperature. Further, before charging the one or more batteries, it may be required that the temperature of the one or more batteries is not lower than a predetermined temperature below which safe charging cannot be ensured.

It is shown in figure 1 that most of the energy consumption (in this example 69%) falls on the tractive energy consumption (energy consumption for propulsion). Significant part (in this example 10%) falls on energy consumption for cabin heating. A small part of the energy consumption (in this example 3%) falls on energy consumption by auxiliary loads. However, the second largest part of the energy consumption falls on energy consumption for heating the one or more batteries, in this exemplary case this part being 17%.

Heating of a battery in cold ambient conditions can use significant amounts of energy and drastically reduce the overall efficiency of the system, for example of the electric vehicle as an exemplary environment for applying embodiments of the present invention. In most electric vehicles, a resistive heater uses electrical power to warm (heat up) a liquid in a liquid cooling system to thereby transfer heat to the one or more batteries. The liquid in the liquid cooling system is normally used to cool the one or more batteries during operation of the one or more batteries if needed. In other electric vehicles, a resistive heater may be used which uses electrical power to warm (heat up) air in an air-cooling system of the one or more batteries to transfer heat to the one or more batteries. The air-cooling system is normally used for air cooling of the one or more batteries during operation of the battery if needed.

However, a resistive heater can increase the energy consumption of the vehicle by around or even over 20% on a WLTP (World Harmonized Light Vehicle Test Cycle) or similar drive cycle. The WLTP is divided into 4 different sub-parts, each one with a different maximum speed: low, medium, high, extra-high. For low power short-range drive cycles, the energy requirements of the electric vehicle can be often met without the use of all the cells within the one or more batteries.

Therefore, the present invention proposes heating up a selected portion of the one or more batteries. Similarly, for situations in which cooling down of the battery is needed, the present invention proposes cooling down a selected portion of the one or more batteries. The selected portion of the one or more batteries may be a part of the one or more batteries in some implementations of embodiments of the present invention while in other implementations of embodiments of the present invention it may be the entire one or more batteries.

For this, the present invention proposes, for a battery that comprises a plurality of battery modules, each battery module comprising at least one battery cell, a variable thermal management of the battery modules. Thermal management includes management of the heating of the battery and management of the cooling of the battery.

In the following description, an electric vehicle is described as an exemplary environment for applying embodiments of the present invention, however, this is not limiting to the present invention. In other words, embodiments of the present invention may be applied to other exemplary environments as well, for example, hybrid vehicles, conventional fuel-based vehicles or different renewable energy system.

The thermal management according to the present invention enables that, when necessary, a certain part of the battery is heated up or cooled down to a different degree than the rest of the battery. The battery may be an AC battery or a DC battery. An AC battery comprises an energy storage part and a power electronics, for example a multilevel converter. For an AC battery, the thermal management of the battery according to the present invention enables that a certain part of each phase of the battery is heated up or cooled down to a different degree than the rest of each phase. For a DC battery, the thermal management of the battery according to the present invention enables that a certain part of the battery is heated up or cooled down to a different degree than the rest of the battery. The battery may be a single-chemistry battery but may also be a multi-chemistry battery. In a multi-chemistry battery, in one or more battery modules each of the battery cells or part of the battery cells may have a first type of battery chemistry, for example lithium-ion based battery chemistry, while in one or more other battery modules, each of the battery cells or part of the battery cells may have a different type of battery chemistry, for example, sodium-ion based battery chemistry. The battery may also be a split-pack battery. A split-pack battery may refer to a battery pack in which multi-chemistry battery cells are arranged within a single battery housing. A split pack battery may also refer to a battery pack that comprises battery cells arranged within multiple housings. The battery chemistry between the battery cells arranged within the different housings may be different.

The thermal management according to the present invention is particularly advantageous for situations in which, in a cold environment, a cold battery needs to be heated up to a predetermined temperature before start of operation of the battery, but at the same time the whole battery power (or the whole energetic capacity of the battery) is not required. The wording "start of operation of the battery" is to be understood as the battery being controlled to provide energy to the different systems of the electric vehicle, for example the traction system and/or auxiliary systems of the electric vehicle. Further, the thermal management according to the present invention is particularly advantageous for situations in which, in a cold environment, only a part of the battery modules of the cold battery needs to be charged, however, the temperature of the cold battery is lower than a predetermined temperature below which a safe charging cannot be ensured.

The thermal management according to the present invention is also particularly advantageous for situations in which the whole energetic capacity of the battery is not needed for operation of the electric vehicle, so that cooling down of the entire battery is not needed.

For low power short-range destinations or mid-range destinations, the power requirements of an electric vehicle can be often met without the use of all the cells (all battery modules) within the battery. In other words, for short-range destinations or mid-range destination, where the whole energetic capacity of the battery may not be required, heating up or cooling down of the entire battery may be energetically inefficient. According to the thermal management according to the present invention a certain part of the battery may be heated up or cooled down to a different degree than the rest of the battery.

In an AC battery where power distribution between different battery modules of the battery can be reconfigured and controlled, periodisation can be made to heat up or cool down a selected portion of the battery to minimise the energy consumption.

For thermal management of the heating, for mid-range and short-range destination, where the majority of the available energetic capacity by the battery needs to be provided, the heating of a part of the battery to a different degree than the rest of the battery can still be utilized. First, the heater can heat up the part of the battery (the part of the battery modules) used for the initial part of the driving. Then, depending on whether there is some dissipated heat from the drive train (traction system) available, either it can be used for heating up the rest of the battery or the resistive heater is used to heat up the rest of the battery when the capacity is needed.

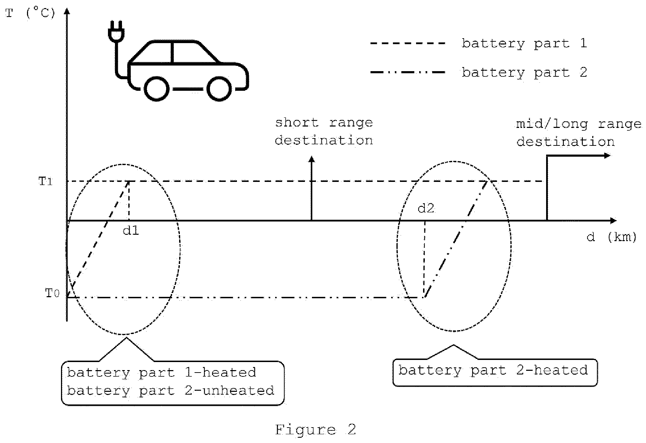

This inventive concept of the present invention is shown schematically in figure 2. For example, for a short-range destination, a part of the battery may provide enough energy required for the short-range destination. Therefore, in cold environment conditions, according to the present invention, a part of the battery (battery part 1, dashed line) is heated to a different degree than the rest of the battery (battery part 2). The battery part 1 may comprise one or more battery modules. The heating may occur before the drive is started or may occur at the initial phase of the drive. The temperature of battery part 1 increases gradually from value T₀ until a predetermined temperature T₁ is reached. When the predetermined temperature T1 is reached, the temperature of the heated battery part 1 is kept at a value suitable for operation of the battery, in this example at T₁. During this time, the rest of the battery (battery part 2-dashed-dotted line) is not heated or is heated to a lower degree than battery part 1. The battery part 2 may comprise one or more battery modules. Even though figure 2 shows the temperature of battery part 2 as being T₀ during operation of battery part 1 during the drive, it is to be understood that the temperature does not necessarily remains at T₀.

If the drive is not a short drive, the energy provided by battery part 1 may not be enough for the drive. Therefore, battery part 2 is started to be heated at a time point (or distance point d2 in figure 2) at which battery part 1 still provides energy for the drive. Battery part 2 is heated at least until the predetermined temperature T₁ is reached. For the rest of the drive, the energy is provided by battery part 2 and battery part 1 or only by battery part 2.

The potential of this type of operation may be increased depending on whether the system has information about the type of drive that is intended to be performed. As an example, a very simple way to decide whether a part of the battery needs to be heated to a different degree than the rest of the battery or the full, preferably uniform, battery heating shall be activated is to use the actual driving mode, which is typically represented by values like eco, range, normal, sport etc. In other words, based on the set mode it may be determined which battery heating shall be activated. A more complicated way of decision making could be based on knowledge of the future route from navigation data.

For implementing the above-described thermal management, the present invention proposes, in a battery system with a fluid cooling/heating system, a variable cooling/heating the battery. The cooling/heating the battery is variable in that one or more battery modules may be cooled/heated to a different degree than other one or more battery modules. The cooling/heating is further variable in that the cooling/heating in one cooling/heating cycle may differ from the cooling/heating in another cooling/heating cycle. A cycle may have a broad meaning in that a cycle may relate to a period of operation of the battery, for example during one drive, followed by period on non-operation of the battery, a cycle may relate to a period which is a portion of the period of operation of the battery or may even relate to a period for heating the battery before charging the battery.

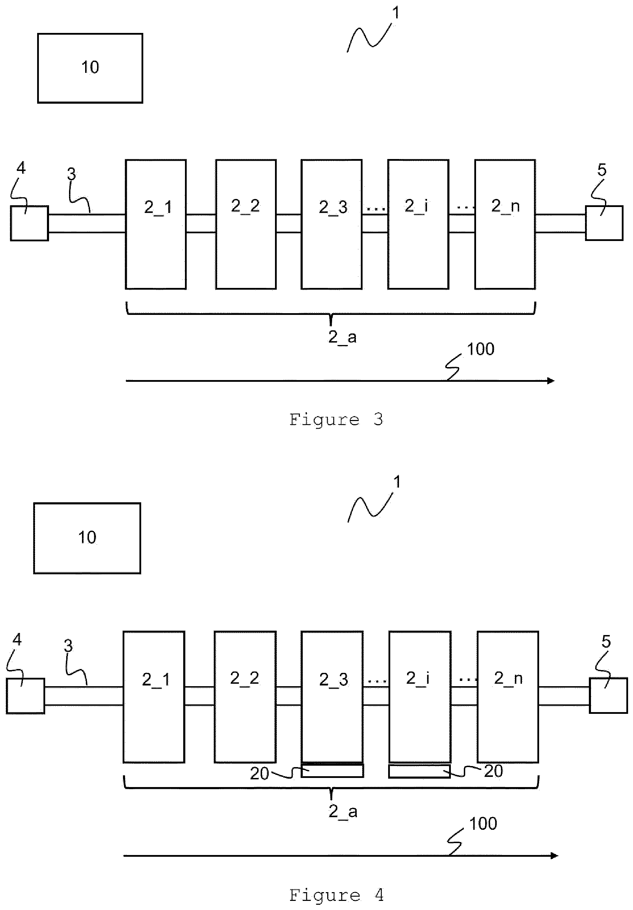

Figure 3 shows an embodiment of the battery system 1 of the present invention. The battery system 1 comprises a battery. It is to be understood that even though "battery" in singular is used, this is not limiting, and the battery system 1 may comprise more than one battery. The battery comprises at least one set 2_a of battery modules 2_1, 2_2, 2_3,...2_i, ...2_n. The at least one set 2_a of battery modules may comprise all battery modules of the battery or may comprise a portion of the battery modules of the battery. For illustrative purposes and without limiting the present invention, it may be assumed that the battery modules 2_1, 2_2, 2_3,...2_i, ...2_n (in the set 2_a) are arranged along a first direction 100. Here, the term "arranged" is to be understood in terms of structural arrangement of the battery modules 2_1, 2_2, 2_3,...2_i, ...2_n. The term "arranged" does not affect the electrical connection between the battery modules 2_1, 2_2, 2_3,...2_i, ...2_n. The electrical connection between the battery modules 2_1, 2_2, 2_3,...2_i, ...2_n may be any one of serial and parallel or one or more battery modules 2_1, 2_2, 2_3,...2_i, ...2_n may even be bypassed. One or more battery modules being bypassed may be understood as not drawing current out from the battery cells of the one or more battery modules that are bypassed. The battery modules 2_1, 2_2, 2_3,...2_i, ...2_may be arranged with a gap or without a gap between them.

The at least one set 2_a of battery modules 2_1, 2_2, 2_3,...2_i, ...2_n, in one or more embodiments of the present invention, may comprise at least two battery modules. In other words, the number of battery modules in the at least one set may vary depending on, for example, the size of each of the battery modules and/or the design of the fluid distribution arrangement described further below.

Each battery module 2_1, 2_2, 2_3,...,2_i,....,2_n comprises at least one battery cell (not shown in the figure). The battery cell is an energy storage element. In other words, each battery module 2_1, 2_2, 2_3,...,2_i,....,2_n comprises one or more battery cells (energy storage elements) encased in a mechanical structure to form each battery module 2_1, 2_2, 2_3,...,2_i,....,2_n. It is to be understood that other components may also be encased in the mechanical structure, for example. For example, in an AC battery, a power electronics, for example a multilevel converter, may also be encased in the mechanical structure. It is to be further understood that a plurality of battery modules 2_1, 2_2, 2_3,...,2_i,....,2_n may further build a battery pack and one or more battery packs may build up the battery.

The battery system 1 comprises further a fluid distribution arrangement for distributing a fluid to the battery. The fluid may be a fluid for heating the plurality of battery modules 2_1, 2_2, 2_3,...,2_i,....,2_n or a fluid for cooling the plurality of battery modules 2_1, 2_2, 2_3,...,2_i,....,2_n. The fluid may be in a liquid or a gaseous state. Examples of liquid are water and oil.

The fluid distribution arrangement comprises at least one first fluid distribution point 4, at least one second fluid distribution point 5, and at least one first channel 3 arranged to distribute the fluid between the at least one first fluid distribution point 4 and the at least one second fluid distribution point 5 via the at least one set 2_a with the fluid sequentially passing each one of the battery modules 2_1, 2_2, 2_3,...,2_i,....,2_n in the at least one set 2_a. Hence, the battery modules are arranged in series with respect to the at least one first channel 3. The at least one first channel 3 provides a fluid communication between the at least one first fluid distribution point 4 and the at least one second fluid distribution point 5.

The at least one first fluid distribution point 4 may be any one of an inlet point and an outlet point, the at least one second fluid distribution point 5 may be the other one of the inlet point and the outlet point, respectively. The inlet point may be defined as the point for distributing the fluid in the battery system 1 while the outlet point may be defined as the point for distributing the fluid away from the battery system 1.

The direction of flowing of the fluid through the at least one first channel 3 may be from the at least one first fluid distribution point 4 to the at least on second fluid distribution point 5, or vice versa, i.e., from the at least one second fluid distribution point 5 to the at least one first fluid distribution point 4.

The battery system 1 comprises further a control unit 10 configured to determine at least one parameter for controlling the fluid distribution arrangement to distribute the fluid to the battery (and hence to the at least one set 2_a, or in other words to each one of battery modules 2_1, 2_2, 2_3,...,2_i,....,2_n in the at least one set 2_a). The control unit 10 is further configured to control the fluid distribution arrangement based on the determined at least one parameter.

The control unit 10 may be any suitable unit or comprise any suitable unit, such as computer processing unit, that can perform computer processing. The control unit 10 (also called controller) may be for example a micro processing unit (MCU). Further, the control means 5 may comprise storage means, such as a memory (not shown in the figure). The memory may also be a separate unit from the control unit 10. The memory may store different information needed for the processing by the control unit 10. Further, the memory may store computer program (code) comprising instructions which, when the program is executed by the control unit 10, cause the control unit 10 to carry out the processing (or method steps) of embodiments of the present invention.

The control unit 10 being configured to control the fluid distribution arrangement to distribute the fluid to the battery may be understood as the control unit 10 being configured to control one or more pumping means (described later) for pumping the fluid in the at least one first channel 3 via one of the first fluid distribution point 4 and the second fluid distribution point 5 or to control one or more valves to open and close (not shown) by sending to the pumping means or the one or more valves corresponding one or more control signals.

In embodiments of the present invention, the control unit 10 may be configured to obtain a first information about an intended operation of the battery.

The first information may be information enabling the control unit 10 to predict the required energetic capacity of the battery. In other words, the control unit 10 may be configured to predict the required energetic capacity of the battery based on the first information. The first information may depend on the environment in which the present invention is applied. For example, when the environment in which the present invention is applied is an electric vehicle, the first information may be information enabling the control unit 10 to predict the required energetic capacity of the battery for the drive. In one embodiment of the present invention, the first information may be information indicating whether the driving mode set by the user is a predetermined driving mode normally used by the user. The predetermined driving mode may be set as one of eco mode, range mode, normal mode, sport mode or similar. Depending on the set driving mode, different energetic capacity of the battery may be required.

In a further embodiment of the present invention, the first information may be an information indicating an entered route for the drive on a navigation system or information obtained through data relating to an entered route for the drive on a navigation system. In other words, in these embodiments of the present invention, the first information may indicate or relate to, for example, a length of a driving route.

In still other embodiments of the present invention, the first information may be information obtained based on past uses of the electric vehicle. For example, in one period of the day or the week, the user may use the electric vehicle for short range destinations, while in other period of the day or the week, the user may use the vehicle for long range destinations.

The control unit 10 may be configured to obtain the first information from another control unit or control means, from a memory, or if the control unit 10 is arranged to process information related to any of the above-described examples of predetermined driving mode, entered route on a navigation system or past uses of the electric vehicle, may even be configured to obtain the information by processing the information related to any of the above-described examples of predetermined driving mode, entered route on a navigation system or past uses of the electric vehicle.

The control unit 10 may be configured to determine said at least one parameter based on the first information.

In embodiments of the present invention, the at least one parameter may be a parameter indicating a direction of flowing of the fluid in the at least one first channel, and/or a flow rate of the fluid and/or a temperature of the fluid.

The direction of flowing of the fluid in the at least one first channel 3 may be as elaborated above, from the at least one first fluid distribution point 4 to the at least on second fluid distribution point 5, or vice versa, i.e., from the at least one second fluid distribution point 5 to the at least one first fluid distribution point 4. For example, in embodiments of the present invention, it may be required that the battery is used with only a part of its capacity. For this, a part of the battery may be cooled or heated to a different degree than the other part of the battery, depending on the environment in which the battery system 1 of the present invention is used. By way of example, the direction of flowing of the fluid may be from the at least one first fluid distribution point 4 to the at least one second fluid distribution point 5. Accordingly, the one or more battery modules 2_1, 2_2, ..., 2_i that are arranged closer to the at least one first fluid distribution point 4 will be cooled/heated to a higher degree and hence more than the other of the battery modules 2i+1, ..., 2_n of the set 2_a arranged farther from the at least one first fluid distribution point 4, as a result of the temperature of the fluid changing as the fluid is sequentially passing each of the battery modules 2_1, 2_2, 2_3,...,2_i,....,2_n due to heat exchange between each of the battery modules 2_1, 2_2, 2_3,...,2_i,....,2_n and the fluid. In this case, the one or more battery modules 2_1, 2_2, ...2_i that are arranged closer to the at least one first fluid distribution point 4 may be used for battery operation.

In cases in which the other of the battery modules 2i+1, ..., 2_n of the set 2_a arranged farther from the at least one first fluid distribution point 4 are preferred to be used instead of the one or more battery modules 2_1, 2_2, ...2_i that are arranged closer to the at least one first fluid distribution point 4, the direction of flow may be from the at least one second fluid distribution point 5 to the at least one first fluid distribution point 4. Which battery modules are preferred to be used may depend on any one of the age, size, capacity, dimensions and similar of each of the battery modules 2_1, 2_2, 2_3,...,2_i,....,2_n.

The flow rate of the fluid may influence the heat exchange between any one of the battery modules 2_1, 2_2, 2_3,...,2_i,....,2_n and the fluid. Higher flow rate may result in lower heat exchange rate, while lower flow rate may result in higher heat exchange. In embodiments of the present invention in which high degree of cooling/heating of the battery is required, the control unit 10 may be configured to determine a low flow rate as the at least one parameter, while in embodiments of the present invention in which lower degree of cooling/heating of the battery is required, the control unit may be configured to determine a high flow rate as the at least one parameter. Here, the expressions "low flow rate" and "high flow rate" are to be understood to indicate flow rates that are different from each other and may represent for example the maximum and the minimum of the possible flow rates in the battery system or any of the flow rates between the maximum and the minimum of the possible flow rates in the battery system. In these embodiments of the present invention, all battery modules may be used for operation, or only a part of the battery modules as elaborated above may be used.

The temperature of the fluid may influence the degree of cooling/heating. In embodiments of the present invention in which high degree of cooling/heating of the battery is required, the control unit 10 may be configured to determine a first temperature as the at least one parameter, while in embodiments of the present invention in which lower degree of cooling/heating of the battery is required, the control unit 10 may be configured to determine a second temperature as the at least one parameter. Naturally, for cooling, the first temperature is lower than the second temperature, while for heating, the first temperature is higher than the second temperature.

In one or more embodiments of the present invention, the fluid distribution arrangement may comprise further at least one pumping means (not shown in the figures) arranged to pump the fluid in the first fluid distribution point 4 or in the second fluid distribution point 5. The fluid distribution arrangement may also comprise at least one further pumping means arranged to pump the fluid away from the first fluid distribution point 4 or away from the second fluid distribution point 5.

In one or more embodiments of the present invention, the at least one parameter may be a parameter indicating a fixed direction of flowing of the fluid. The fixed direction of flowing of the fluid may be defined as a fixed direction for a (certain) time period. By way of example, the certain time period may be one drive cycle in embodiments of the present invention in which the application environment of the present invention is the electric vehicle. The fixed direction of flowing may be the direction of flowing from the at least first fluid distribution point 4 to the at least second fluid distribution point 5 or from the at least second fluid distribution point 5 to the at least first fluid distribution point 4. In these embodiments of the present invention, the control unit 10 may be configured to control said pumping means to pump said fluid in the first fluid distribution point 4 or the second fluid distribution point 5 based on the parameter.

In other embodiments of the present invention, the at least one parameter may be a parameter indicating an alternating direction of flowing of the fluid. The control unit 10 may be configured to control the pumping means to alternately pump the fluid in the first fluid distribution point 4 and the second fluid distribution point 5 based on the parameter. When the pumping means is pumping the fluid in the first fluid distribution point 4, the flowing direction is from the first fluid distribution point 4 to the second fluid distribution point 5, while when the pumping means is pumping the fluid in the second fluid distribution point 5, the flowing direction is from the second fluid distribution point 5 to the first fluid distribution point 4.

The control unit 10 may be configured to control the pumping means such that the pumping means pumps the fluid in the first fluid distribution point 4 for a first period of time and pumps the fluid in the second fluid distribution point 5 for a second period of time. The first period of time may have the same length as the second period of time but may also have a different length. The length of the first period and/or the second period may depend on many factors. Such factors may be obtained based on the first information. One factor may be the driving mode, by way of example. The control unit 10 may be therefore configured to determine the length of the first period and/or the length of the second period based on the first information.

In one or more embodiments of the present invention, the at least one parameter may be a parameter indicating a flow rate and the control unit 10 may be configured to control the pumping means to apply the flow rate.

In one or more embodiments of the present invention, the battery may comprise at least one heat sink for at least one battery module 2_1, 2_2, 2_3,...,2_i,....,2_n in the set 2_a. There is shown in figure 4 an embodiment of the present invention, in which one heat sink 20 is provided for each of the battery modules 2_3 and 2_i. It is to be understood that it is possible that only one heat sink 20 is provided as a common heat sink for at least two of the battery modules 2_1, 2_2, 2_3,...,2_i,....,2_n in the at least one set 2_a. It is to be understood that providing one heat sink 20 for each of the battery modules 2_3 and 2_i is merely an example, and one or more heat sinks 20 may be provided for any one of the other battery modules.

The presence of at least one heat sink 20 may lead to a variable flow rate of the fluid in the at least one first channel 3 even if the pumping means is not controlled to vary the flow rate of the fluid. However, even if at least one heat sink 20 is provided, the pumping means may still be controlled to vary the flow rate of the fluid. The one or more battery modules 2_1, 2_2, 2_3,...,2_i,....,2_n provided with the at least one heat sink 20 may exchange heat with the at least one heat sink 20 and in turn may exchange less heat with the fluid in comparison to the one or more battery modules that are not provided with at least one heat sink 20. The fluid passing each one of the one or more battery modules 2_1, 2_2, 2_3,...,2_i,....,2_n that exchange heat with the at least one heat sink 20 takes less heat (in case of cooling) or gives away less heat (in case of heating) to the corresponding battery module and has different temperature than when passing the one or more battery modules that are not provided with at least one heat sink 20. Therefore, there will be portions of the first channel 3 through which the fluid is flowing with different temperature of the fluid. A different temperature of the fluid may lead to a different viscosity of the fluid (when the fluid is for example oil) in portions of the first channel 3 which may lead to a different flow rate in those portions.

In these embodiments of the present invention in which the battery comprises at least one heat sink 20 for at least one battery module of the set 2_a, the control unit may be configured to determine the parameter based on the first information and information related to the heat sink 20. The information related to the heat sink 20 may be information indicating to what degree the heat sink 20 is capable to take away heat from the corresponding battery module for cooling or to what degree the heat sink 20 is able to provide heat to the corresponding battery module for heating.

In one or more embodiments of the present invention, the obtaining of the first information may not be obligatory, however preferential.

In embodiments of the present invention, in which the control unit 10 is not obtaining the first information, the control unit 10 may be configured to determine the at least one parameter, for example, based on the determined one parameter in one or more previous uses of the battery system. For example, if during one drive cycle the at least one parameter is a parameter indicating a direction of flowing of the fluid from the at least one first fluid distribution point 4 to the at least one second fluid distribution point 5, during the next drive cycle, the control unit may determine the direction of flowing of the fluid to be from the at least one second fluid distribution point 5 to the at least one first fluid distribution point 4.

However, based on the first information, the control means 5 may perform even more efficient thermal management of the battery 2. In one or more embodiments of the present invention, more than one set of battery modules may be provided in the battery. In one or more of these embodiments, at least a part of the at least one first channel 3 may be common for at least two sets 2_a, 2_b of battery modules.

In the following, embodiments of the present invention will be described in which at least a part of the at least one first channel 3 may be common for at least two sets 2_a, 2_b of battery modules.

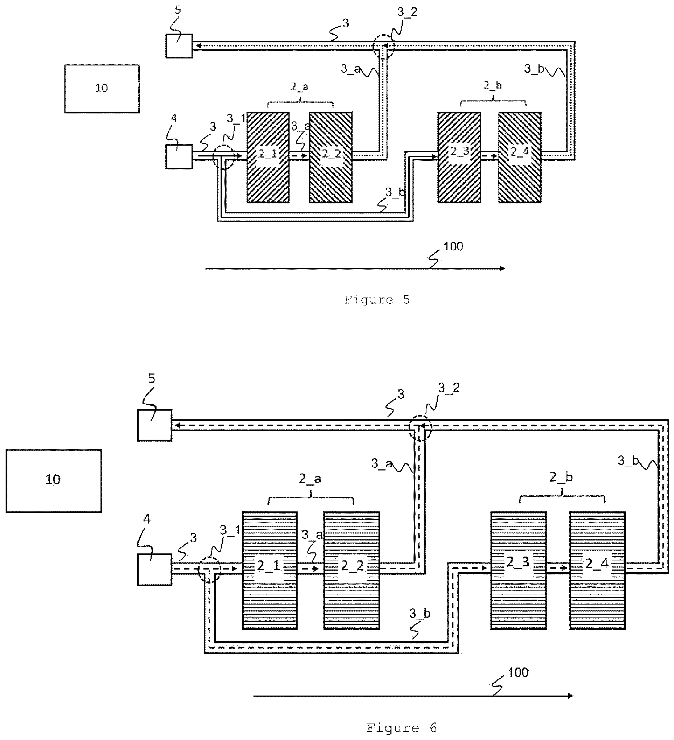

There is shown in figure 5 an embodiment of the present invention in which the battery comprises at least two sets 2_a, 2_b of battery modules. More specifically, there is shown in figure 5 that the battery comprises two sets 2_a, 2_b of battery modules: set 2_a comprising the battery modules 2_1 and 2_2 and set 2_b comprising the battery modules 2_3 and 2_4. It is to be understood that this is merely an example at least in that the number of sets is not limited to two and the number of battery modules in each set is not limited to two. At least one of the sets 2_a, 2_b may have one battery module and at least one of the sets may have at least two battery modules.

The at least one first channel 3 is arranged to branch in at least two branch channels. Each one of the at least two branch channels may be arranged to distribute the fluid to at least one of the sets with the fluid sequentially passing each one of the battery modules in the corresponding at least one of the sets. There is shown in figure 5 the at least one first channel 3 branching into a first branch channel 3_a and a second branch channel 3_b.

The first branch channel 3_a distributes the fluid to the first set 2_a with the fluid sequentially passing each one of the battery modules 2_1, 2_2 in the first set 2_a.

The second branch 3_b distributes the fluid to the second set 2_b with the fluid sequentially passing each one of the battery modules 2_3, 2_4 in the second set 2_b.

The at least one first channel 3 may comprise a first common part and a second common part for each of the at least sets 2_a, 2_b. The first common part is the part of the at least one first channel 3 between the at least one first fluid distribution point 4 and the first branch off point 3_1 where the at least one first channel 3 branches into the at least first branch channel 3_a and the second branch channel 3_b (when looked along the first direction 100 in figure 5). The second common part is the part of the at least one first channel 3 between the second branch off point 3_2 and the at least second fluid distribution point 5 (when looked along the first direction 100 in figure 5. In other words, the at least one first channel 3 may comprise at least two branch channels 3_a, 3_b arranged between the first branch off point 3_a and the second branch off point 3_b. The at least one first channel 3 may comprise a first common part between the first fluid distribution point 4 and the first branch off point 3_a and a second common part between the second fluid distribution point 5 and the second branch off point 3_b.

It is to be understood that in embodiments of the present invention in which more than two sets are provided, the number of branch channels is smaller than or equal to the number of sets. The number of common parts may be two, as elaborated above.

The direction of flowing of the fluid, represented in figure 5 with an arrow is entirely optional and depends on the concrete arrangement of the first fluid distribution point 4 and the second fluid distribution point 5 with respect to the arrangement of the plurality of battery modules in each set. There is shown in figure 5 that the second fluid distribution point 5 is arranged on the same side with the first fluid distribution point 4 with respect to the first battery module 2_1. However, this is not limiting but merely illustrative, and the first fluid distribution point 4 and the second fluid distribution point 5 may be arranged differently depending on the particular construction of the battery. However, in each of the sets, the battery modules are arranged in series with respect to the at least one first channel or with respect to the corresponding branch channel thereof, meaning that the fluid passes sequentially each one of the battery modules in the corresponding set 2_a, 2_b.

It is further to be noted that even though there is shown in figure 5 that the battery modules in each of the first set 2_a and the second set 2_b are arranged along the first direction 100, the battery modules may be arranged along the same or different direction, however, are arranged such that the fluid passes sequentially each one of the battery modules in the corresponding set 2_a, 2_b.

In this embodiment of the present invention, the direction of flowing of the fluid is in one direction only (fixed direction), from the first fluid distribution point 4 to the second fluid distribution point 5 or vice versa from the second fluid distribution point 5 to the first fluid distribution point 4. The flow rate may be constant or may be variable. In implementations in which partial heating of the battery is required, the pumping means may be configured to operate and hence to pump the fluid in one of the first fluid distribution point 4 and the second fluid distribution point at a relatively low flow rate and in the one fixed direction (there is shown in figure 5 with an arrow that the direction of flowing is from the at least one first fluid distribution point 4 to the at least one second fluid distribution point 5). This will cause the battery modules 2_1, 2_3 in each set 2_a, 2_b closer to the fluid distribution point through which the fluid is distributed into the first channel 3 (in figure 5 the first fluid distribution point 4) to be cooled more (in case of cooling) or to be heated more (in case of heating) and hence to a different degree than the battery modules 2_2, 2_4 in each set 2_a, 2_b further in the sequence that are cooled less (in case of cooling), or heated less (in case of heating).

Therefore, there is shown in figure 5 that the first battery module 2_1, 2_3 in each set 2_a, 2_b is cooled more or heated more (filling with inclined lines to the right) than the second battery module 2_2, 2_4 in each set 2_a, 2_b (filling with inclines lines to the left) . In case of cooling, the fluid by way of cooling the battery module 2_1 (and accordingly 2_3) increases its temperature (dashed line between battery modules 2_1 and 2_2 as well as between battery modules 2_3 and 2_4) and hence cools the battery module 2_2 (and accordingly 2_4) less. In case of heating, the fluid by way of heating the battery module 2_1 (and accordingly 2_3) decreases its temperature and hence heats the battery module 2_2 (and accordingly the battery module 2_4) less. Hence, partial heating/cooling of the battery may be easily achieved. It is to be understood that even though the battery modules 2_2 and 2_4 may not be needed for operation of the battery they may still be heated or cooled, however, to a significantly lower extent than the battery modules 2_1 and 2_3. The amount of heating/cooling of the battery modules 2_2 and 2_4 may be tailored by way of tailoring for example, the flow rate.

There is shown in figure 6 an embodiment of the present invention, preferably for implementations in which uniform cooling/heating may be required. In this embodiment of the present invention, the pumping means may be arranged to operate at a higher flowing rate than in the embodiment described with reference to figure 5, which will lead to lower heat exchange between the fluid and each battery module 2_1, 2_2, 2_3, 2_4. In this embodiment of the present invention, the flowing direction of the fluid is periodically alternated between a first flowing direction from the at least one first fluid distribution point 4 to the at least one second fluid distribution point 5 and a second flowing direction from the at least one second fluid distribution point 5 to the at least one first fluid distribution point 4. In this way, the battery modules 2_1 and 2_3 in each of the first set 2_a and the second set 2_b and the battery modules 2_2 and 2_4 in each of the first set 2_a and the second set 2_b will receive, when heating, or give away, when cooling, on average the same amount of heat (filling of the battery modules with horizontal lines). It is to be understood that the amount of heat does not need to be exactly the same but that in the overall process the heating or the cooling is substantially uniform. The length of the periods for alternating the direction of flowing and the flow rate may be adjusted for achieving as much as possible uniform heating/cooling.

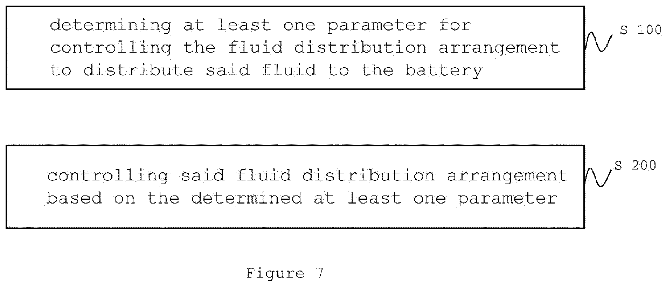

There is shown in figure 7 a general method embodiment of the present invention for controlling the battery system 1, described above in the embodiments of the present invention. The method comprises the step (S 100) of determining at least one parameter for controlling the fluid distribution arrangement to distribute said fluid to the battery, and the step (S 200) of controlling said fluid distribution arrangement based on the determined at least one parameter.

In one or more embodiments of the present invention, the method may comprise obtaining the first information about an intended operation of the battery, and determining said parameter based on the first information. The at least one parameter is related to at least one of direction of flowing of the fluid in the at least one first channel, a flow rate of the fluid and a temperature of the fluid.

Hence, the present invention, provides for a partial heating/cooling of the battery or uniform heating/cooling of the battery in a simple and effective way. Since valves for reducing the flow or distributing the flow away from one or more battery modules for achieving partial heating may not be needed, the construction of the battery system may be simplified and the wight and the dimensions of the battery system may be reduced.

The above-described embodiment of the present invention enables therefore that the thermal management of the battery is improved and hence the energetic efficiency of the system in which the battery is used is improved.

Although detailed embodiments have been described, these only serve to provide a better understanding of the invention defined by the independent claims and are not to be seen as limiting.

## Claims

1. A battery system comprising:
a battery comprising at least one set of battery modules,
each battery module comprising at least one battery cell,
a fluid distribution arrangement for distributing a fluid to the battery, said fluid distribution arrangement comprising
at least one first fluid distribution point,
at least one second fluid distribution point, and
at least one first channel arranged to distribute the fluid between the at least one first fluid distribution point and
the at least one second fluid distribution point via the at least one set with the fluid sequentially passing each one of the battery modules in the set, and
the battery system comprising further
a control unit configured to determine at least one parameter for controlling the fluid distribution arrangement to distribute said fluid to the battery and to control said fluid distribution arrangement based on the determined at least one parameter.

2. The battery system according to claim 1, wherein the control unit is configured to obtain a first information about an intended operation of the battery, and the control unit is configured to determine said parameter based on the first information.

3. The battery system according to any one of claims 1 and 2, wherein the at least one parameter is a parameter indicating a direction of flowing of the fluid in the at least one first channel, and/or a flow rate of the fluid and/or a temperature of the fluid.

4. The battery system according to any one of claims 1 to 3, wherein the fluid distribution arrangement comprises further at least one pumping means arranged to pump said fluid in the first fluid distribution point or the second fluid distribution point.

5. The battery system according to any one of claims 3 and 4, wherein the at least one parameter is a parameter indicating a fixed direction of flowing of the fluid and the control unit is configured to control said pumping means to pump said fluid in the first fluid distribution point or the second fluid distribution point based on said parameter.

6. The battery system according to any one of claims 3 and 4, wherein the at least one parameter is a parameter indicating an alternating direction of flowing of the fluid and the control unit is configured to control said pumping means to alternately pump said fluid in the first fluid distribution point and the second fluid distribution point based on said parameter.

7. The battery system according to any one of claims 3 to 6, wherein the at least one parameter is a parameter indicating a flow rate and the control unit is configured to control said pumping means to apply said flow rate.

8. The battery system according to any one of claims 1 to 7, wherein the battery comprises further at least one heat sink for at least one battery module of the set.

9. The battery module according to claim 8, wherein the control unit is configured to determine said parameter based on the first information and information related to the heat sink.

10. The battery system according to any one of claims 1 to 9, wherein the at least one set of battery modules comprises at least two battery modules.

11. The battery system according to any one of claims 1 to 10, wherein at least a part of the at least one first channel is common for at least two sets of battery modules.

12. The battery system according to any one of claims 1 to 11, wherein the battery comprises at least two sets of battery modules, wherein the at least one first channel branches in at least two branch channels, wherein each one of the branch channels is arranged to distribute the fluid to at least one of the sets with the fluid sequentially passing each one of the battery modules in the corresponding at least one set.

13. A method for controlling a battery system, said battery system comprising:
a battery comprising at least one set of battery modules,
each battery module comprising at least one battery cell,
a fluid distribution arrangement for distributing a fluid to the battery, said fluid distribution arrangement comprising
at least one first fluid distribution point,
at least one second fluid distribution point, and
at least one first channel arranged to distribute the fluid between the at least one first fluid distribution point and
the at least one second fluid distribution point via the set with the fluid sequentially passing each one of the battery modules in the set,
said method comprising
determining at least one parameter for controlling the fluid distribution arrangement to distribute said fluid to the battery, and
controlling said fluid distribution arrangement based on the determined at least one parameter.

14. The method of claim 13, further comprising:
obtaining a first information about an intended operation of the battery, and
determining said parameter based on the first information.

15. The method according to claim 13 or claim 14, wherein the at least one parameter is related to at least one of direction of flowing of the fluid in the at least one first channel, a flow rate of the fluid and a temperature of the fluid.
